# EUROPEAN PATENT APPLICATION

(11) **EP 4 583 275 A1**
(43) Date of publication of application: **09.07.2025**
(21) Application number: 24187078.1
(22) Date of filing: 08.07.2024
(51) Int. Cl.: H01M 50/213, H01M 50/247, H01M 50/262, H01M 50/271

(54) **BATTERY PACK**

(30) Priority: 05.01.2024 KR 20240002337
(71) Applicant: SAMSUNG SDI CO., LTD., Giheung-gu Yongin-si, Gyeonggi-do 17084 (KR)
(72) Inventor: Baek, Seonyoung, 17084 Yongin-si, Gyeonggi-do (KR)
(74) Representative: Gulde & Partner

(57) **Abstract**

A battery pack includes: a plurality of battery cells (15) arranged adjacent to one another in a first direction; and a case holder (40) fixing the plurality of battery cells at a specific position. The case holder includes: an upper holder (50) accommodating a portion of the plurality of battery cells in a radial direction of the plurality of battery cells; and a lower holder (60) facing the upper holder with the plurality of battery cells therebetween and supporting the plurality of battery cells in the radial direction of the plurality of battery cells in a sandwich form.

## Description

### BACKGROUND

### 1. Field

Aspects of embodiments of the present disclosure relate to a battery pack.

### 2. Description of the Related Art

A secondary battery is a chargeable and dischargeable battery, different from a primary battery, which is not designed to be chargeable. Low-capacity secondary batteries are used in small portable electronic devices, such as smartphones, feature phones, laptop computers, digital cameras, and camcorders, and high-capacity secondary batteries are used as motor-driving power sources, power-storing batteries, etc., for hybrid vehicles, electric vehicles, etc. A secondary battery may generally include an electrode assembly including a cathode and an anode, a case accommodating the electrode assembly, an electrode terminal connected to the electrode assembly, etc.

A battery pack includes a case holder for fixing a plurality of battery cells in a specific position. The case holder fixes the plurality of battery cells at the specific position while accommodating at least some of the plurality of battery cells. The case holder not only determines the position of the plurality of battery cells but also protects the plurality of battery cells if an external shock is applied thereto. If a shock is applied to the battery pack, the battery case cushions (or protects) the plurality of battery cells from a shock transfer. The case holder that fixes the plurality of battery cells inside the battery case also absorbs the shock.

For example, in a battery pack including a conventional cylindrical battery cell, a case holder (e.g., a cell holder) that fixes the battery cell inside a battery case is configured to cover a radial upper portion of the battery cell. A radial lower portion of the battery cell is configured to be supported by the battery case. A rib structure extending from the battery case restrains the case holder. If the battery pack having this structure receives a shock, such as by being dropped, the rib structure of the battery case may damage the battery cell.

The above-described information disclosed in this Background section provides the background of the present disclosure and is for improving understanding of the background of the present disclosure, and thus, it may include information that does not constitute related (or prior) art.

### SUMMARY

Embodiments of the present disclosure include a battery pack having an improved case holder structure for fixing a battery cell from among components of the battery pack at a specific position to improve shock resistance and productivity of the battery pack while reducing a manufacturing cost of the battery pack.

However, aspects and features of the present disclosure are not limited to the above-mentioned aspects and features, and other aspects and features not mentioned may be clearly understood by those of ordinary skill in the art from the description of embodiments of the present disclosure described below.

Additional aspects and features will be set forth, in part, in the description which follows and, in part, will be apparent from the description or may be learned by practice of the presented embodiments of the present disclosure.

According to an embodiment of the present disclosure, a battery pack includes: a plurality of battery cells arranged adjacent to one another in a first direction; and a case holder fixing the plurality of battery cells at a specific position. The case holder includes: an upper holder accommodating a portion of the plurality of battery cells in a radial direction of the plurality of battery cells; and a lower holder facing the upper holder with the plurality of battery cells therebetween and supporting the plurality of battery cells in the radial direction of the plurality of battery cells in a sandwich form. The radial direction may be orthogonal to the first direction. The lower holder and/or the upper holder may comprise wall portions that are adapted to the curvature of the outer surface of the battery cells.

A parting line separating the upper holder and the lower holder from each other may include a plurality of lines. In other words, a boundary region between the upper holder and the lower holder can be described by more than one, e.g. two or three, straight lines. Thus, a first line, e.g., a first line describing a first contact area, between the lower holder and the upper holder in a first region may include an angle with a second line, e.g., a second line describing a second contact area, between the lower holder and the upper holder.

The plurality of lines of the parting line may include a combination of straight lines parallel to the radial direction of the plurality of battery cells. For example, a first line among the plurality of lines may be parallel to the first direction, and a second line among the plurality of lines may be a radial direction of the plurality of battery cells, but may form an angle with the first direction. The second line forming an angle with the first direction may describe a contact area in an edge region of the upper holder and the lower holder.

The lower holder may include a fixing hook, or a plurality of fixing hooks (for example, 2n fixing hooks or 2n-2 fixing hooks, where n is the number of battery cells), protruding (for example, from a dividing wall separating two battery cells from each other) toward the upper holder, and the upper holder may include a hook coupling hole, or a number of hook coupling holes corresponding to the number of fixing hooks of the lower holder, through which the fixing hook is fixed (or the fixing hooks are fixed).

A central line of the fixing hook may be formed eccentrically from a center of the hook coupling hole.

The central line of the fixing hook may be formed at a bisection point of a line segment connecting centers of adjacent ones of the battery cells.

The fixing hook (e.g., a base of the fixing hook) may be formed at opposite ends in a longitudinal direction of the plurality of battery cells.

The fixing hook may be (or be arranged) in a range of 3 mm to 10 mm inside, from an end of the plurality of battery cells, in a second direction. The second direction may be perpendicular to the first direction. The second direction may be a longitudinal direction of the plurality of battery cells.

The lower holder may include a separation preventing projection configured to prevent separation of the plurality of battery cells in a longitudinal direction of the plurality of battery cells. The separation prevention projection may cover part of the end walls of the battery cells. The separation prevention projection may ensure that a battery cell does not detach from the composite along the second direction, for example along the longitudinal direction of the battery cell.

### BRIEF DESCRIPTION OF THE DRAWINGS

The following drawings attached to this specification illustrate embodiments of the present disclosure and describe aspects and features of the present disclosure together with the detailed description of the present disclosure described later. The present disclosure should not be construed as being limited to the embodiments shown in the appended drawings.

The above and other aspects and features of embodiments of the present disclosure will be more apparent from the following description taken in conjunction with the accompanying drawings.
FIG. 1 is a perspective view of a battery pack according to embodiments of the present disclosure;
FIG. 2 is an exploded perspective view of the battery pack shown in FIG. 1;
FIG. 3 is a perspective view of the battery pack shown in FIG. 1;
FIG. 4 is a side view of the battery pack of FIG. 3;
FIG. 5 is a cross-sectional view of the battery pack taken along the line V - V in FIG. 3;
FIG. 6 is a cross-sectional view of the battery pack taken along the line VI - VI in FIG. 3;
FIG. 7 is a perspective view of a lower holder of the battery pack shown in FIG. 3; and
FIG. 8 is a perspective view of an upper holder of the battery pack shown in FIG. 3.

### DETAILED DESCRIPTION

Reference will now be made, in detail, to embodiments, examples of which are illustrated in the accompanying drawings. In this regard, the described embodiments may have different forms and should not be construed as being limited to the descriptions set forth herein. Accordingly, embodiments are merely described below, by referring to the figures, to explain aspects and features of the present description.

The terms and words used in the present specification and claims should not be construed as being limited to ordinary or dictionary meanings and should be interpreted as having meanings and concepts consistent with the technical idea of the present disclosure based on the principle that the inventors may appropriately define the concept of the terms to describe their invention in the best way. Therefore, it should be understood that the configurations shown in the drawings and embodiments described herein are example embodiments of the present disclosure, and do not represent all of the aspects and features of the present disclosure, such that there may be various equivalents and variations that replace them at the time of filing the present application.

The statement that two elements are "the same" as each other may mean that they are "substantially the same" as each other. Thus, a case where two elements are "substantially the same" as each other may include a case where the two elements have a low-level deviation or a deviation a skilled person recognizes as low-level, for example, a deviation of 5% or less. If a uniform parameter is uniform in an area, it may mean that it is uniform from an average point of view (e.g., is uniformly average).

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

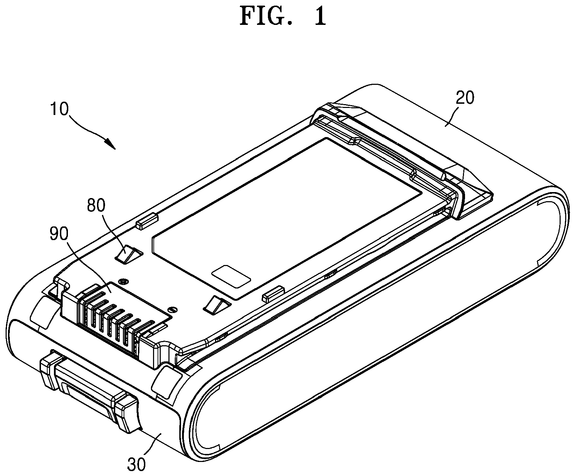

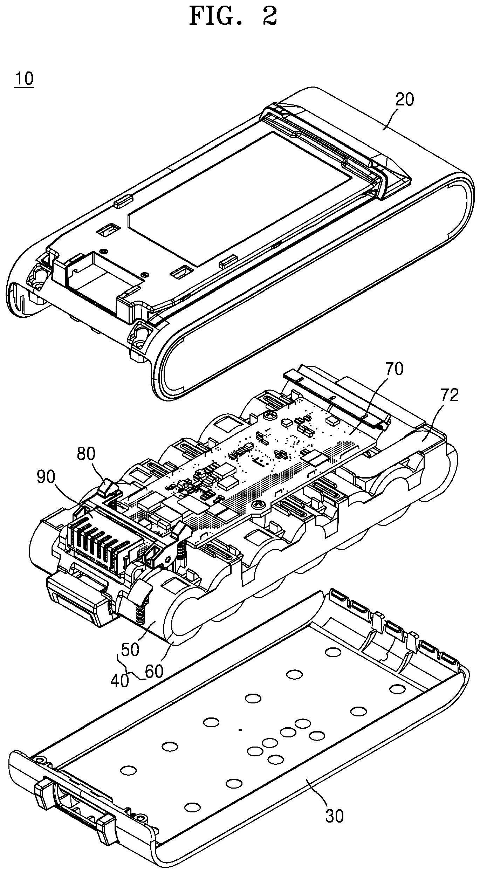

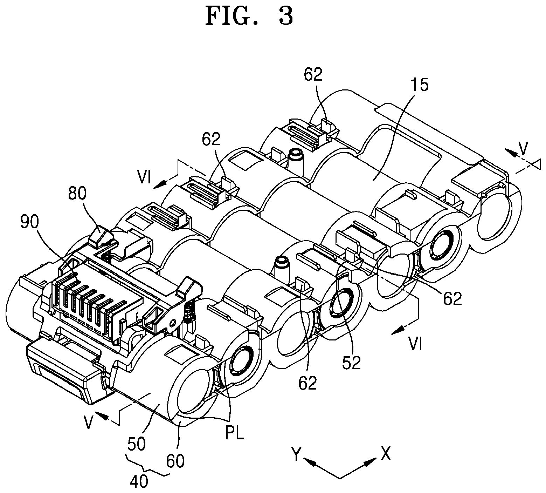

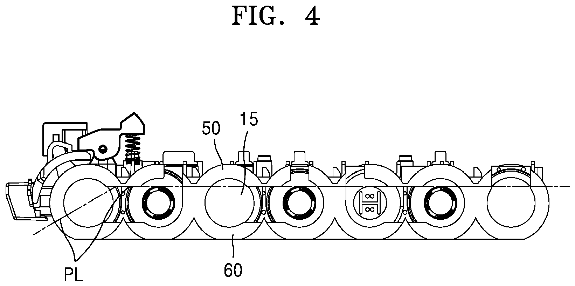

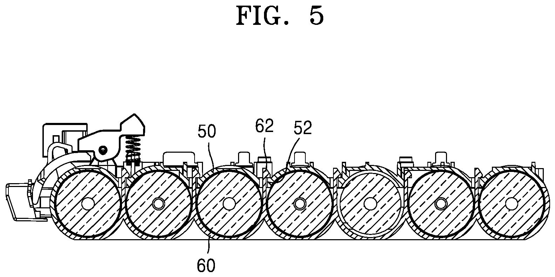

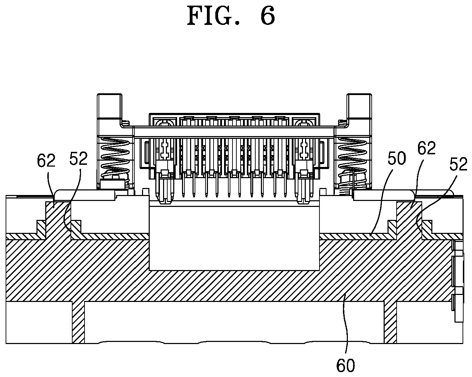

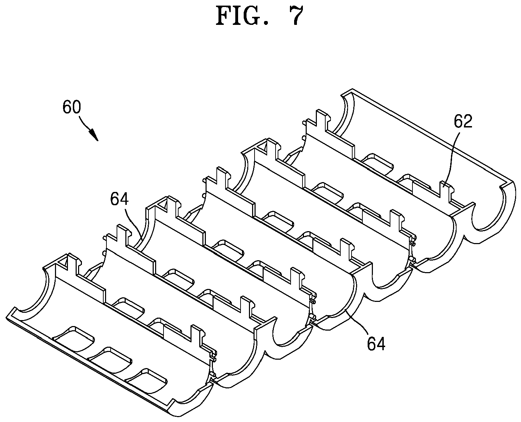

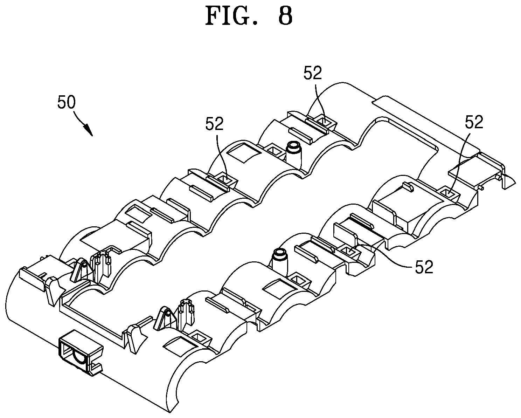

FIG. 1 is a perspective view of a battery pack according to embodiments of the present disclosure. FIG. 2 is a view of the battery pack shown in FIG. 1 in which a top case and a bottom case are separated from each other. FIG. 3 is a view of the battery pack shown in FIG. 1 in which a case holder and a plurality of battery cells are coupled to each other. FIG. 4 is a side view of FIG. 3. FIG. 5 is a cross-sectional view of the battery pack taken along the line V - V in FIG. 3. FIG. 6 is a cross-sectional view of the battery pack taken along the line VI - VI in FIG. 3. FIG. 7 is a perspective view of a lower holder shown in FIG. 3. FIG. 8 is a perspective view of an upper holder shown in FIG. 3.

Referring to FIGS. 1 to 8, a battery pack 10, according to embodiments of the present disclosure, may include a plurality of battery cells 15, each having a cylindrical shape. The plurality of battery cells 15 may be fixed, e.g., fixed in position, by a case holder 40. The plurality of battery cells 15 may be arranged adjacent to one another in a first direction (e.g., an X direction). The case holder 40 may include an upper holder 50 and a lower holder 60. The case holder 40 may be a structure accommodating the plurality of battery cells and arranged inside the case 20.

The upper holder 50 may fix the plurality of battery cells 15 in a form accommodating upper portions of the plurality of battery cells 15 in a radial direction (or radial shape) of the plurality of battery cells 15. For example, the shape of an inner surface of the upper holder 50 may be adapted to the shapes of upper parts of battery cells 15. A profile of the upper holder 50 may include multiple partial circles.

The lower holder 60 may be arranged to face the upper holder 50 with the plurality of battery cells 15 therebetween. The upper holder 50 and the lower holder 60 may support the plurality of battery cells 15 in a radial direction (e.g., may support a radial surface) of the plurality of battery cells 15 in the form of a sandwich. For example, the shape of an inner surface of the lower holder 60 may be adapted to the shapes of lower parts of battery cells 15. A profile of the lower holder 60 may include multiple partial circles.

A parting line PL that separates the upper holder 50 and the lower holder 60 from each other may include a plurality of lines. The plurality of lines may intersect with each other. For example, in areas of corners of the case holder 40, two of the plurality of lines forming the parting line PL may intersect. The upper holder 50 and the lower holder 60 may be respectively manufactured by injection molding of a synthetic resin.

The parting line PL may be a dividing line separating the upper holder 50 and the lower holder 60 from each other. The plurality of lines of (or forming) the parting line PL may include a combination of straight lines parallel to a radial direction of the plurality of battery cells 15. When the parting line PL includes a combination of a plurality of straight lines rather than one straight line, the upper holder 50 and the lower holder 60 may be effectively manufactured to be separated from each other. For example, a complex structure may be intensively formed such that main components of the battery pack 10 may be installed on the upper holder 50. For example, a structure for seating a battery management system (BMS) 70 on the upper holder 50 may be formed. A locking device 80 for fixing or separating the battery pack 10 on or from an electronic device may be installed on the upper holder 50 or on the lower holder 60. A connection terminal 90 for electrically connecting the battery pack 10 to the electronic device may be installed on the upper holder 50 or on the lower holder 60. A structure of the lower holder 60 may be simplified (e.g., may be simplified as much as possible) to reduce a manufacturing cost of the battery pack 10. As such, when the parting line PL between the upper holder 50 and the lower holder 60 includes a plurality of straight lines, productivity may be improved.

A coupling structure of the upper holder 50 and the lower holder 60 will now be described in detail.

The lower holder 60 may include a fixing hook 62. The fixing hook 62 may be provided in plural. For example, 2n fixing hooks or 2n-2 fixing hooks may be provided, where n is the number of battery cells. The fixing hook 62 may protrude toward the upper holder 50. For example, the fixing hook 62 may protrude perpendicularly to a straight line from among the plurality of straight lines of the parting line PL. For example, when the straight line is a horizontal line, the fixing hook 62 may protrude in a vertical direction. The fixing hook 62 may protrude upwardly from a top surface of the lower holder 60. A hook shape to be caught in a hook coupling hole 52, described below, may be provided at an upper end of the fixing hook 62.

The upper holder 50 may include the hook coupling hole 52. The hook coupling hole 52 may be provided in plural to correspond to the fixing hook 62. For example, the upper holder may include one hook coupling hole 52 for each of the fixing hooks 62 of the lower holder 60. The hook coupling hole 52 may be formed to penetrate (or extend through) a top surface and a bottom surface of the upper holder 50. The hook coupling hole 52 may be formed, for example, as a rectangular hole (or opening). The fixing hook 62 may penetrate (or may extend through) the hook coupling hole 52. The upper end of the fixing hook 62 may be caught and fixed on the top surface of the hook coupling hole 52. When the fixing hook 62 and the hook coupling hole 52 are coupled to each other, a coupled state between the upper holder 50 and the lower holder 60 may be maintained.

A central line of the fixing hook 62 may be formed (or extend) eccentrically from the center of the hook coupling hole 52. When the central line of the fixing hook 62 is formed eccentrically from the center of the hook coupling hole 52, the fixing hook 62 may not be easily separated from the hook coupling hole 52 after being coupled thereto. When the fixing hook 62 is coupled to the coupling hole 52, an overlap between a portion of the fixing hook 62 and an upper surface of the upper holder 50 may be created.

The central line of the fixing hook 62 may be formed at a bisection point of a line segment connecting centers of adjacent battery cells 15. In other words, the hook may be located exactly in the center between two battery cells along the first direction. When the central line of the fixing hook 62 is formed at the bisection point of the line segment connecting the centers of the adjacent battery cells 15, interference between the fixing hook 62 and the battery cell 15 may be effectively avoided.

The fixing hook 62 (or the fixing hooks 62) may be formed at (or may extend to) opposite ends of the battery cell 15 in a longitudinal direction. The fixing hook 62 (or the fixing hooks 62) may be formed on the opposite ends of the battery cell 15 in the longitudinal direction, that is, in a second direction (e.g., a Y direction), thereby firmly supporting an end and the other end of the battery cells 15. Thus, the case holder 40 may effectively protect the battery cell 15 from an external shock.

The fixing hook 62 may be formed about 3 mm to about 10 mm inside from the end of the battery cell 15 in the second direction. In other words, a distance between the fixing hook and one end of the battery cell along the second direction may be between 3 mm and 10 mm. The second direction may be the longitudinal direction of the battery cell 15. If the fixing hook 62 is formed less than about 3 mm inside from the end of the battery cell 15, a central portion of the battery cell 15 may not be effectively fixed. If the fixing hook 62 is formed greater than about 10 mm inside from the end of the battery cell 15, the end of the battery cell 15 may not be effectively fixed.

The lower holder 60 may include a separation preventing projection 64. The separation preventing projection 64 may prevent the battery cells 15 from flowing in (e.g., moving in or shifting in) the longitudinal direction of the battery cell 15. The separation preventing projection 64 may prevent the plurality of battery cells 15 from being separated from the case holder 40. The separation preventing projection 64 may protrude in a radial direction of the plurality of battery cells 15. The separation preventing projection 64 may form a partial side wall of the lower holder 60. The separation preventing projection 64 may be arranged to be in contact with end surfaces of the plurality of battery cells 15.

The BMS 70 is electrically connected to the plurality of battery cells 15 and a bus bar 72 and may be installed in the upper holder 50. The locking device 80, which connects the battery pack 10 to an electronic device, for example, a vacuum cleaner, and the connection terminal 90, etc., may be installed in the upper holder 50.

The case holder 40 may be accommodated in a space formed by the top case 20 and the bottom case 30, thereby being further protected from an external shock.

Hereinafter, the battery pack 10 including the components as described above will be described, in detail, by describing an example of a process of assembling the battery pack 10.

For example, the plurality of battery cells 15 may be assembled to (or in) the lower holder 60. The BMS 70, the connection terminal 90, the locking device 80, etc., may be installed in advance on the upper holder 50. The hook coupling hole 52 of the upper holder 50 may be arranged to correspond to the fixing hook 62 provided in the lower holder 60. Pressure may be then applied in a direction causing the upper holder 50 and the lower holder 60 to be close to each other. Thus, the fixing hook 62 may be coupled through the hook coupling hole 52. The fixing hook 62 may be snap-fastend in the hook coupling hole 52. The hook shape provided at the upper end of the fixing hook 62 may be caught and fixed by an edge of the hook coupling hole 52. Thus, the plurality of battery cells 15 may be fixed by the case holder 40. An assembly of the plurality of battery cells 15 and the case holder 40 may be assembled while being accommodated in the top case 20 and the bottom case 30. Thus, the assembling of the battery pack 10 may be completed. As such, in the assembled battery pack 10, it is not necessary to apply a urethane foam tape conventionally added to an inner surface of the bottom case 30 to prevent damage to the battery cells 15 in case of an external shock because, according to embodiments of the present disclosure, the upper holder 50 and the lower holder 60 may firmly protect the plurality of battery cells 15. Accordingly, shock resistance of the battery pack 10 may be improved. Moreover, because a cushioning member, like a conventionally applied urethane foam tape is omitted, the manufacturing cost of the battery pack 10 may be reduced.

Because the upper holder 50 and the lower holder 60 are assembled by using the fixing hook 62 and the hook coupling hole 52 in the radial direction of the plurality of battery cells 15, the ease of assembly may be improved. The radial direction of the plurality of battery cells 15 may be a third direction which may be orthogonal to the first direction and to the second direction. Moreover, a conventional rib structure in the bottom case 30 may be omitted, thereby simplifying the structure of the bottom case 30 and, thus, reducing the manufacturing cost of the battery pack 10. In addition, when the rib structure of the bottom case 30 is removed or omitted, a space between the battery cell 15 and the case may be secured, thereby reducing damage to the plurality of battery cells 15 in case of an external shock.

As described above, in the battery pack according to embodiments of the present disclosure, the case holder for fixing the position of the battery cell includes the upper holder and the lower holder separated in the radial direction of the battery cells to protect the battery cells from an external shock applied to the battery pack, thereby improving shock resistance of the battery pack. Moreover, according to embodiments of the present disclosure, when the parting line for the upper holder and the lower holder includes a combination of the plurality of lines, a complex structure may be formed in the upper holder while the lower holder may be simplified, thereby improving productivity of the battery pack. Furthermore, the battery cells may be firmly fixed by the upper holder and the lower holder such that a conventional urethane foam tape applied to the inner surface of the battery case for preventing a shock may be omitted, thereby reducing the manufacturing cost of the battery pack.

While embodiments of the present disclosure are described herein, the present disclosure is not limited thereby and various modifications and changes may be made by those of ordinary skill in the art within the range of the claims set forth below.

However, effects that may be obtained through the present disclosure are not limited to the above-described effects, and other technical effects not mentioned may be clearly understood by those of ordinary skill in the art from the description of the present disclosure described below.

It should be understood that the embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cells (15) arranged adjacent to one another in a first direction; and
a case holder (40) fixing the plurality of battery cells (15) at a specific position, the case holder (40) comprises:
an upper holder (50) accommodating a portion of the plurality of battery cells (15) in a radial direction of the plurality of battery cells (15); and
a lower holder (60) facing the upper holder (50) with the plurality of battery cells (15) therebetween and supporting the plurality of battery cells (15) in the radial direction of the plurality of battery cells (15) in a sandwich form.

2. The battery pack as claimed in claim 1, wherein a parting line (PL) separating the upper holder (50) and the lower holder (60) from each other comprises a plurality of lines.

3. The battery pack as claimed in claim 2, wherein the plurality of lines of the parting line (PL) comprises a combination of straight lines parallel to the radial direction of the plurality of battery cells (15).

4. The battery pack as claimed in one of claims 1 to 3, wherein the lower holder (60) comprises a fixing hook (62) protruding toward the upper holder (50), and
wherein the upper holder (50) comprises a hook coupling hole (52) through which the fixing hook (62) is fixed.

5. The battery pack as claimed in claim 4, wherein a central line of the fixing hook (62) is formed eccentrically from a center of the hook coupling hole (52).

6. The battery pack as claimed in claim 4 or claim 5, wherein the central line of the fixing hook (62) is formed at a bisection point of a line segment connecting centers of adjacent ones of the battery cells (15).

7. The battery pack as claimed in one of claims 4 to 6, wherein the fixing hook (62) is formed at opposite ends in a longitudinal direction of the plurality of battery cells (15).

8. The battery pack as claimed in claim 7, wherein the fixing hook (62) is in a range of 3 mm to 10 mm inside, from an end of the plurality of battery cells (15), in a second direction.

9. The battery pack as claimed in claim 1, wherein the lower holder (60) comprises a separation preventing projection (64) configured to prevent separation of the plurality of battery cells (15) in a longitudinal direction of the plurality of battery cells (15).
